# EUROPEAN PATENT APPLICATION

(11) **EP 4 703 221 A1**
(43) Date of publication of application: **04.03.2026**
(21) Application number: 25197619.7
(22) Date of filing: 22.08.2025
(51) Int. Cl.: B60W 10/06, B60W 10/08, B60W 20/10, B60W 20/15, B60W 10/10

(54) **OVERTEMPERATURE PROTECTION OF EXHAUST COMPONENTS OF INTERNAL COMBUSTION ENGINES OF VEHICLES WITH HYBRID PROPULSION**

(30) Priority: 30.08.2024 IT 202400019477
(71) Applicant: Stellantis Europe S.p.A., 10135 Torino (TO) (IT)
(72) Inventor: RIEGEL, Alessandro, 10135 TORINO (IT)
(74) Representative: Studio Torta S.p.A.

(57) **Abstract**

Vehicular control system **(1)** for the overtemperature protection of exhaust components **(TWC, T)** of a vehicle **(V)** with hybrid propulsion; the vehicle **(V)** with hybrid propulsion comprises a vehicular powertrain **(GM)** comprising a hybrid propulsion unit **(UHP)** and a transmission system **(T)** interposed between the hybrid propulsion unit **(UHP)** and drive wheels **(W)** of the vehicle **(V)** with hybrid propulsion; the hybrid propulsion unit **(UHP)** comprises an internal combustion engine **(MT)** and a reversible electric machine **(ME)** and is electronically controllable to operate selectively in different operating modes comprising an electric mode wherein the vehicle **(V)** with hybrid propulsion is propelled by the reversible electric machine **(ME)** alone, and a hybrid mode, wherein the vehicle **(V)** with hybrid propulsion is propelled by the internal combustion engine **(MT),** possibly assisted by the reversible electric machine **(ME)** under certain operating conditions of the vehicle **(V)** with hybrid propulsion. The vehicular control system **(1)** is designed to: acquire maximum trapped air for overtemperature protection values **(Fresh_Air_Trapped_Max_For_Exhaust_Overtemperature_Protection)** and shaft speed values **(Engine_Speed)** of the internal combustion engine **(MT)** of the vehicle **(V)** with hybrid propulsion; determine maximum engine torque at different speeds values **(Maximum_Engine_Torque_At_Different_Engine_Speed)** applicable from the combustion engine **(MT)** of the vehicle **(V)** with hybrid propulsion to the wheels **(W)** of the vehicle **(V)** with hybrid propulsion itself based on the maximum trapped air for overtemperature protection values **(Fresh_Air_Trapped_Max_For_Exhaust_Overtemperature_Protection)** and shaft speed values **(Engine_Speed);** and adapting the dynamics of the vehicle **(V)** with hybrid propulsion according to the maximum engine torque at different speeds values **(Maximum_Engine_Torque_At_Different_Engine_Speed)**.

## Description

### CROSS-REFERENCE TO RELATED PATENT APPLICATIONS

This patent application claims priority from Italian patent application no. 102024000019477 filed on August 30, 2024, the entire disclosure of which is incorporated herein by reference.

### TECHNICAL SECTOR OF THE INVENTION

The present invention relates generally to the field of thermal protection of powertrain components of vehicles, in particular to overtemperature protection of exhaust components of vehicles with hybrid propulsion. In particular, the present invention relates to a system and a computer or software product for overtemperature protection of exhaust components of vehicles with hybrid propulsion.

The present invention relates generally to the field of vehicles, whether equipped with an internal combustion engine only or with hybrid propulsion, i.e., equipped with an internal combustion engine and an electric motor or reversible electric machine, either of the conventional type, wherein the electric batteries are charged with the aid of internal combustion engines or of the so-called plug-in type (PHEV, Plug-in Hybrid Electric Vehicle), wherein the electric batteries can also be charged without the aid of the internal combustion engines, using external power sources that can be electrically connected to the electric batteries via wired or wireless connections.

The present invention is applicable to any type of road motor vehicle, both for the transport of people, such as a passenger car, a bus, a camper van, and so on, and for the transport of goods, such as an industrial motor vehicle (lorry, truck-trailer, articulated vehicle, etc.) or a light or medium-heavy commercial vehicle (van, panel van, chassis cab, etc.).

### STATE OF THE ART

As is well known, vehicle exhaust components can be damaged if they operate for a cumulative time at a temperature above a critical limit temperature value, i.e. the exhaust components operate at an overtemperature for a cumulative time that exceeds a predefined value; in particular, the aforementioned critical limit temperature value is predefined, i.e. set at the design stage of the exhaust component itself.

In the case of a petrol engine, it is known that the exhaust components to be protected from the aforementioned overheating are the three-way catalyst and the turbocharger turbine. In particular, in the event that one of the aforementioned exhaust components is determined to be operating overtemperature, it is known to enrich the fuel in such a way as to reduce the operating temperature of that exhaust component in order to implement an overtemperature protection strategy.

Further known solutions aim to reduce the maximum engine torque value applicable to the wheels of the vehicle in proportion to the temperature(s) of the exhaust component(s) affected by overtemperature.

Further known solutions aim to reduce the maximum engine torque value in proportion to the magnitudes influencing the temperature(s) of the exhaust component(s) affected by overheating, such as, for example, the boost pressure.

Vehicles with hybrid propulsion are also known, i.e. vehicles comprising powertrains including an internal combustion engine and a reversible electric machine or electric motor that can be electronically controlled to operate selectively in different operating modes, specifically electric, in which the vehicle is propelled by the reversible electric machine alone, and hybrid, in which the vehicle is propelled by the internal combustion engine, possibly assisted by the reversible electric machine under certain vehicle operating conditions. In this case, it is known to apply overtemperature protection strategies based on the reduction of the engine torque to be applied to the vehicle wheels by a power split optimizator of a vehicular control system of the vehicle or on exhaust backpressure protection on a gasoline particulate filter by the same vehicular control system.

### OBJECT AND SUMMARY OF THE INVENTION

The Applicant found that the known solutions could be improved.

Specifically, in the case of fuel enrichment, this enrichment may lead to an increase in fuel consumption and a consequent increase in emissions; in addition, according to some regulations, such as, for example, "Euro6.e bis", fuel enrichment is not permitted.

In the event of a reduction of the maximum engine torque value in proportion to the temperature(s) of the exhaust component(s) affected by overtemperature, the Applicant observed that irregularities in the transmission of engine torque to the wheels of the vehicle, as well as oscillations in the transmission itself, may occur. Furthermore, in the case of reducing the maximum torque value in proportion to the quantities affecting the temperature(s) of the exhaust component(s) affected by overtemperature, the Applicant noted that delayed and inaccurate temperature control may be established.

Furthermore, in the case of vehicles with hybrid propulsion, the strategies implemented, in particular the reduction of engine torque, do not calculate the maximum engine torque at different speeds of the internal combustion engine, which is consumed by the power split optimizator. As a result, the power split optimizator applies a gear change that can drive the internal combustion engine to an operating point that is not consistent with an overtemperature protection strategy; as a result, the same power split optimizator should apply an immediate opposite gear change, leading to an abrupt shifting of gears and consequent driving discomfort for the driver. Therefore, the power split optimizator, in this case, represents an additional source of thermal stress for the exhaust components due to the aforementioned gear changes, as the gear change requires a very rapid change in the torque delivered by the internal combustion or thermal engine, performed by degrading the combustion efficiency by delaying the ignition of the fuel; this manoeuvre consequently results in delayed combustion that ends up in the exhaust pipes.

The object of the present invention is thus to make available a system and a computer product or software for the overtemperature protection of exhaust components of vehicles with hybrid propulsion which make it possible to solve at least in part the problems which plague the solutions of the prior art.

According to the present invention, a system and a computer product or software for the overtemperature protection of of exhaust components of vehicles with hybrid propulsion are provided, as claimed in the appended claims.

### BRIEF DESCRIPTION OF THE DRAWINGS

Figure 1 schematically shows a vehicle comprising an internal combustion engine including exhaust components.
Figure 2 schematically shows a system for the overtemperature protection of exhaust components of vehicles with hybrid propulsion according to the present invention.
Figure 3 shows a variation of engine torque, temperature and power of a vehicle power train of the vehicle with hybrid propulsion versus speed of the vehicle with hybrid propulsion.
Figure 4 shows a change in engine torque and temperature of an exhaust component of the vehicle with hybrid propulsion versus speed of the vehicle with hybrid propulsion.

### DESCRIPTION OF PREFERRED EMBODIMENTS OF THE INVENTION

The present invention will now be described in detail with reference to the accompanying figures to allow a skilled person to make and use it. Various modifications of the embodiment described will be immediately clear to the skilled person and the general principles disclosed can be applied to other embodiments and applications without departing from the protection scope of the present invention, as defined in the enclosed drawings. Therefore, the present invention shall not be limited to the illustrated and described embodiments, but it must be granted the widest protection scope in accordance with the features disclosed and claimed.

Unless otherwise defined, all the herein used technical and scientific terms have the same meaning commonly used by the ordinary skilled in the art of the present invention. In case of conflict, the present invention, including definitions provided, will be binding. Furthermore, the examples are provided for merely illustrative purposes and must not be regarded as limiting.

In particular, the block diagrams included in the accompanying figures and hereinafter described must not be considered as a representation of the structural features, i.e. construction limitations, but must be construed as a representation of functional features, namely inner properties of the devices and defined by the obtained effects i.e. functional limitations which can be implemented in different ways, so as to protect the functionality thereof (possibility of functioning).

In order to facilitate the understanding of the embodiments described herein, reference will be made to some specific embodiments and a specific language will be used to describe them. The terminology used in the present document aims to describe only particular implementations, and is not intended to limit the scope of the present invention.

In summary, the present invention determines the maximum engine torque value applicable to the shaft of an internal combustion or thermal engine on the basis of a maximum amount of trapped air for overtemperature protection, possibly used to reduce a target trapped air value to establish an overtemperature protection strategy. In more detail, in the case of vehicles with hybrid propulsion, the present invention makes it possible to determine the maximum engine torque applicable to the shaft of the internal combustion engine of the vehicle with hybrid propulsion on the basis of the maximum amount of trapped air for overtemperature protection; furthermore, in this case, the engine torque required at the drive wheels is kept in line with the driver's request by compensating for a lack of engine torque to be provided by the internal combustion engine with a higher engine torque provided by the reversible electric machine or electric motor of the same vehicle with hybrid propulsion. In this way, irrespective of the speed of the vehicle powertrain, the power output is constant and an overtemperature protection strategy is maintained for the components, especially the exhaust components, of the internal combustion engine.

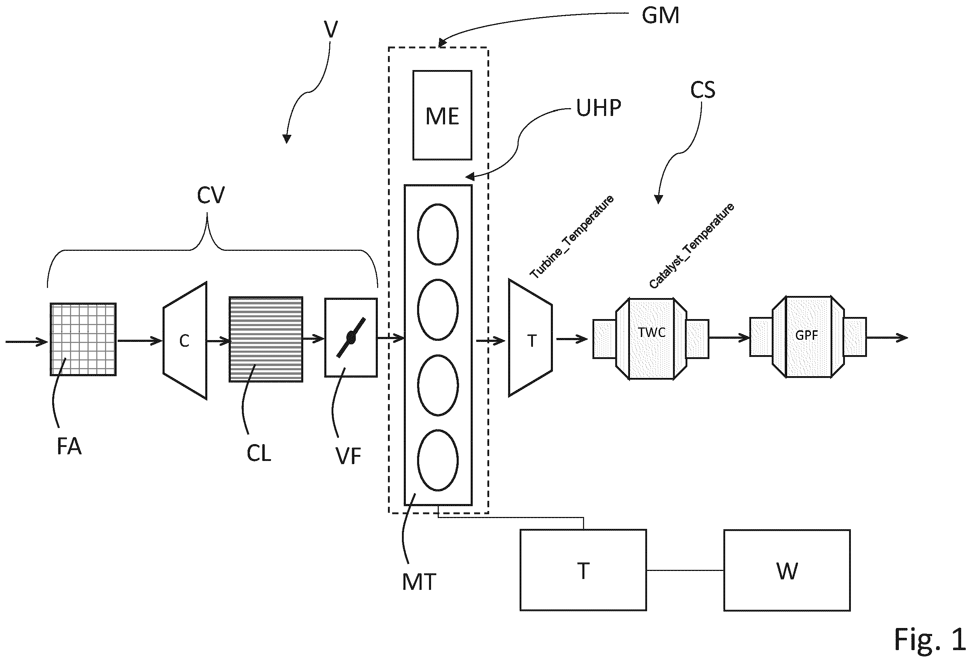

Figure 1 schematically shows a vehicle with hybrid propulsion **V** comprising a vehicular powertrain **GM** comprising a hybrid propulsion unit **UHP** and a transmission system **T** interposed between the hybrid propulsion unit **UHP** and the drive wheels **W** of the vehicle with hybrid propulsion **V.** Specifically, the hybrid propulsion unit UHP comprises an internal combustion engine **MT** and a reversible electric machine **ME** and is electronically controllable to operate selectively in different operating modes comprising:
- an electric mode, in which the vehicle with hybrid propulsion **V** is propelled by the reversible electric machine **ME** alone; and
- a hybrid mode, in which the vehicle with hybrid propulsion **V** is propelled by the internal combustion engine **MT,** possibly assisted by the reversible electric machine **ME** under certain operating conditions of the vehicle with hybrid propulsion **V.**

The vehicle **V** also comprises vehicular components **CV,** the latter comprising at least one valve **VF** in particular a throttle valve designed to allow upstream regulation of the internal combustion engine **MT** of the amount of trapped air. Furthermore, as shown in Figure 1, the vehicular components **CV** comprise:
- an air filter **FA** designed to filter the air entering the vehicle **V;**
- a compressor **C** connected to the air filter **FA** and designed to receive filtered air to compress it; and
- a cooling system or cooler **CL** connected to the compressor **C** and the valve **VF** and designed to perform the cooling of the compressed air coming from the compressor **C.**

The vehicle **V** further comprises exhaust components **CS** connected to the internal combustion engine **MT** and therein comprising a turbocharger turbine **T,** designed to use the exhaust gas produced by the internal combustion engine **MT** to propel the compressor **C** of the vehicle **V** to increase its rotational speed and to take in air from the outside and supply compressed air to the internal combustion engine **MT** to allow more fuel to be combusted and a three-way catalyst **TWC,** the latter being connected to the turbocharger turbine **T** and designed to convert the major pollutants in the exhaust gas (in particular, hydrocarbons, carbon monoxide and nitrogen oxides) into less polluting gases. According to an aspect of the present invention, the exhaust components **CS** further comprise a gasoline particulate filter **GPF,** connected to the three-way catalyst **TWC** and designed to filter particulate matter emitted by the internal combustion engine **MT.**

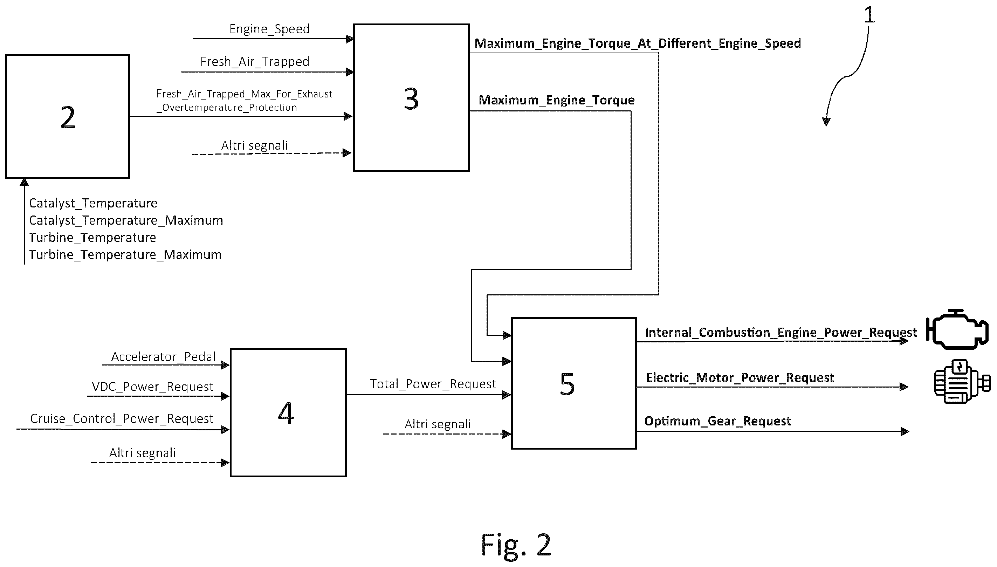

The vehicle with hybrid propulsion **V** is designed to communicate with a vehicular control system **1** for the overtemperature protection of exhaust components **CS** of vehicles with hybrid propulsion **V,** shown schematically in Figure 2; in particular, according to an aspect of the present invention, the vehicular control system **1** is implementable in one or more powertrain control systems of the vehicle with hybrid propulsion **V.**

Specifically, with reference to Figure 2, the vehicular control system **1** is designed to:
- acquire maximum trapped air for overtemperature protection values **Fresh_Air_Trapped_Max_For_Exhaust_Overtemperature_Protection** and shaft speed values **Engine_Speed** of the internal combustion engine **MT** of the vehicle **V** with hybrid propulsion;
- determine maximum engine torque at different speeds values **Maximum_Engine_Torque_At_Different_Engine_Speed** applicable from the combustion engine **MT** of the vehicle **V** with hybrid propulsion to the wheels **W** of the vehicle **V** with hybrid propulsion itself based on the maximum trapped air for overtemperature protection values **Fresh_Air_Trapped_Max_For_Exhaust_Overtemperature_Protection** and shaft speed values **Engine_Speed;** and
- adapt the dynamics of the vehicle **V** with hybrid propulsion according to the maximum engine torque at different speed values **Maximum_Engine_Torque_At_Different_Engine_Speed.**

As shown in Figure 2, the vehicular control system **1** comprises:
- an overtemperature protection module **2** designed to receive quantities relative to the exhaust components **TWC, T** of the vehicle **V** with hybrid propulsion and output the maximum trapped air for overtemperature protection values **Fresh_Air_Trapped_Max_For_Exhaust_Overtemperature_Protection;** and
- a maximum engine torque calculator **3** designed to receive as input the maximum trapped air for overtemperature protection values **Fresh_Air_Trapped_Max_For_Exhaust_Overtemperature_Protection,** a quantity of trapped air **Fresh_Air_Trapped** and the speed values **Engine_Speed** to determine the maximum engine torque at different speed values **Maximum_Engine_Torque_At_Different_Engine_Speed** and maximum engine torque values **Maximum_Engine_Torque** of the vehicle **V** with hybrid propulsion.

It should be noted that the calculator **3** is also designed to receive additional signals as input, e.g. atmospheric pressure and atmospheric temperature.

In addition, the vehicular control system **1** comprises:
- a power request calculator **4** designed to receive as input and process data indicative of the driving pattern of the vehicle **V** with hybrid propulsion, in particular a quantity related to the pressure of the accelerator pedal by the driver **Accelerator_Pedal,** a quantity related to a request for VDC (Vehicle Dynamics Control) **VDC_Power_Request,** a quantity relating to a request for an anti-lock braking system and a quantity relating to a power request for cruise control **Cruise_Control_Power_Request** and any other quantities not described in detail here, to determine a total power request **Total_Power_Request;** and
- a power split optimizator **5** designed to receive as input and process the total power request **Total_Power_Request,** the maximum engine torque values **Maximum_Engine_Torque** and the maximum engine torque at different speeds values **Maximum_Engine_Torque_At_Different_Engine_Speed** to determine the respective power or torque request **Internal_Combustion_Engine_Power_Request, Electric_Motor_Power_Request** of the internal combustion engine **MT** and the reversible electric machine **ME.**

In more detail, according to an aspect of the present invention, the power split optimizator **5** designed to generate an optimum gear request **Optimum_Gear_Request** to be applied in order to minimize the energy consumption required to propel the vehicle **V** with hybrid propulsion, specifically fuel consumption and consequent emission generation.

According to an aspect of the present invention, by way of non-limiting example, considering that the exhaust components considered comprise the three-way catalytic converter **TWC** and the turbocharger turbine **T,** the relative quantities of the exhaust components **TWC, T** of the vehicle **V** with hybrid propulsion comprise at least:
- a three-way catalyst temperature value **Catalyst_Temperature;**
- a maximum permissible three-way catalyst temperature value **Catalyst_Temperature_Maximum;**
- a turbocharger turbine temperature value **Turbine_Temperature;** and
- a maximum permissible turbocharger turbine temperature value **Turbine_Temperature_Maximum.**

Consequently, the overtemperature protection module **2** is designed to determine the maximum trapped air values for the overtemperature protection **Fresh_Air_Trapped_Max_For_Exhaust_Overtemperature_Protection** based on at least the three-way catalyst temperature value **Catalyst_Temperature,** the maximum permissible three-way catalyst temperature value **Catalyst_Temperature_Maximum,** the turbocharger turbine temperature value **Turbine_Temperature** and the maximum permissible turbocharger turbine temperature value **Turbine_Temperature_Maximum.**

According to further aspects of the present invention, which are not described in detail below, the quantities relating to the exhaust components **CS** of the vehicle **V** with hybrid propulsion may comprise quantities other than those listed above, in particular depending on the exhaust components **CS** considered.

A preferred embodiment of the present invention is now described; in particular, a preferred operation of the overtemperature protection module **2** is described in the following by way of non-limiting example for the present invention. Therefore, the Applicant notes that the maximum trapped air for overtemperature protection values **Fresh_Air_Trapped_Max_For_Exhaust_Overtemperature_Protection** determined by the overtemperature protection module **2** may be determined differently from what is described below.

The overtemperature protection module **2** is designed to implement an overtemperature protection strategy as described below. In detail, the overtemperature protection module **2** is designed to:
- determine the maximum trapped air for overtemperature protection value **Fresh_Air_Trapped_Max_For_Exhaust_Overtemperature_Protection** based at least on the quantities for the exhaust components **CS** of the vehicle **V** with hybrid propulsion, as mentioned above;
- verify that the maximum trapped air for overtemperature protection value **Fresh_Air_Trapped_Max_For_Exhaust_Overtemperature_Protection** is less than a target trapped air value **Fresh_Air_Trapped_Target;** and
- if the maximum trapped air for overtemperature protection value **Fresh_Air_Trapped_Max_For_Exhaust_Overtemperature_Protection** is determined to be less than the target trapped air value **Fresh_Air_Trapped_Target,** limiting the target trapped air value **Fresh_Air_Trapped_Target** to at least the maximum trapped air for overtemperature protection value **Fresh_Air_Trapped_Max_For_Exhaust_Overtemperature_Protection** such that a engine torque transmitted by the vehicular powertrain **GM** to the drive wheels **W** of the vehicle **V with hybrid propulsion** is reduced, thus operating an overtemperature protection strategy.

In addition, if the maximum trapped air for overtemperature protection value **Fresh_Air_Trapped_Max_For_Exhaust_Overtemperature_Protection** is determined to be greater than the target trapped air value **Fresh_Air_Trapped_Target,** the vehicular control system **1** is designed to determine that the target trapped air value **Fresh_Air_Trapped_Target** is such that an overtemperature protection strategy is implemented, i.e. the requirement for the maximum trapped air for overtemperature protection value **Fresh_Air_Trapped_Max_For_Exhaust_Overtemperature_Protection** is met.

Therefore, the overtemperature protection module **2** is designed to output the maximum trapped air for overtemperature protection value **Fresh_Air_Trapped_Max_For_Exhaust_Overtemperature_Protection,** which is then determined to represent the value required to protect the three-way catalyst **TWC** and/or the turbine **T.**

According to an aspect of the present invention, the overtemperature protection module **2** is designed to determine the maximum trapped air for overtemperature protection value **Fresh_Air_Trapped_Max_For_Exhaust_Overtemperature_Protection** based on at least the relative quantities of the exhaust components **TWC, T** and the rotational speed of the shaft **Engine_Speed** of the internal combustion engine **MT** of the vehicle **V** with hybrid propulsion.

Specifically, according to an aspect of the present invention, the overtemperature protection module **2** is designed to:
- determine a maximum trapped air value to match the maximum temperature value of the three-way catalyst **TWC,** referred to below as **Fresh_Air_Trapped_Max_To_Match_Catalyst_Temperature_Maximum,** based on the shaft rotation speed **Engine_Speed** of the internal combustion engine **MT** and the maximum permissible temperature value of the three-way catalyst **TWC Catalyst_Temperature_Maximum;**
- determine a maximum trapped air value to correspond to the maximum temperature value of the turbocharger turbine **T,** referred to below as **Fresh_Air_Trapped_Max_To_Match_Turbine_Temperature_Maximum,** based on the rotational speed of the shaft **Engine_Speed** of the internal combustion engine **MT** and the maximum permissible temperature value of the turbocharger **T Turbine_Temperature_Maximum;**
- determine control values **CTRL_{TWC}, CTRL_{T}** of the three-way catalyst **TWC** and turbocharger turbine **T** on the basis of the temperature value of the three-way catalyst **Catalyst_Temperature,** the maximum permissible temperature value of the three-way catalyst **TWC Catalyst_Temperature_Maximum** and the temperature value of the turbocharger turbine **T Turbine_Temperature** and the maximum permissible temperature value of the turbocharger turbine **T Turbine_Temperature** respectively; and
- determine the maximum trapped air for overtemperature protection value **Fresh_Air_Trapped_Max_For_Exhaust_Overtemperature_Protection** on the basis of the maximum trapped air value to match the maximum temperature value of the three-way catalyst **TWC Fresh_Air_Trapped_Max_To_Match_Catalyst_Temperature_Maximum,** the maximum temperature value of the turbocharger turbine **T Fresh_Air_Trapped_Max_To_Match_Turbine_Temperature_Maximum** and the control values **CTRL_{TWC}, CTRL_{T}** of the three-way catalyst **TWC** and turbocharger turbine **T.**

Furthermore, according to an aspect of the present invention, the maximum trapped air for overtemperature protection value **Fresh_Air_Trapped_Max_For_Exhaust_Overtemperature_Protection** is also determined on the basis of one or more temperature correction values of the three-way catalyst **TWC** and the turbocharger turbine **T** as also described in more detail below.

Note that the above operations are performed for any value of shaft rotation speed **Engine_Speed** of the internal combustion engine **MT** of the values of shaft rotation speed **Engine_Speed** described in the previous paragraphs.

In addition, the overtemperature protection module **2** is designed to:
- receive as input a temperature limit value of the three-way catalyst **TWC,** referred to below as **Catalyst_Temperature_Limit,** and correction values, e.g., the above corrective terms to account for non-rated conditions due to, for example, changes in coolant temperature of the internal combustion engine **MT,** referred to as **Engine_Coolant_Temperature,** barometric pressure **Barometric_Pressure,** fuel-to-air ratio **Fuel_Air_Ratio** and other magnitudes not described herein, referred to hereafter as correction values **Catalyst_Temperature_Spark_Correction, Catalyst_Temperature_FAR_Correction** and **Catalyst_Temperature_Nth_Correction,** respectively, indicative of the correction required to consider a non-rated (spark) ignition angle, or one of the additional input values to non-rated values, so as to determine a base temperature limit value of the three-way catalyst **TWC,** referred to below as **Catalyst_Temperature_Limit_Base;** and
- process the base temperature limit value of the three-way catalyst **TWC Catalyst_Temperature_Limit_Base** and the shaft rotation speed **Engine_Speed** of the internal combustion engine **MT** to determine the maximum trapped air value to match the maximum trapped air value to correspond to the maximum temperature value of three-way catalyst **TWC Fresh_Air_Trapped_Max_To_Match_Catalyst_Temperature_Maximum,** i.e. the amount of trapped air that allows the maximum temperature value to be reached by the three-way catalyst **TWC** and also taking into account the maximum temperature value of the three-way catalyst **TWC Catalyst_Temperature_Maximum.**

Note that the above considerations are similarly valid for the turbocharger turbine **T,** for which the following corrective values are considered:
- a temperature limit value of the turbocharger turbine **T,** referred to below as **Turbine_Temperature_Limit;** and
- corresponding temperature correction values due to the possible use of a different spark advance from a rated value, relative to contributions due to the variation of the value of the fuel to air ratio **Fuel_Air_Ratio** with respect to the stoichiometric rated value and relative to further quantities such as an internal combustion engine coolant temperature **MT Engine_Coolant_Temperature** and/or barometric pressure **Barometric_Pressure.**

Consequently, the overtemperature protection module **2** is designed to determine a base temperature limit value for the turbocharger turbine **T,** referred to below as **Turbine_Temperature_Limit_Base;** this value is then processed together with the rotational speed of the shaft **Engine_Speed** of the internal combustion engine **MT** to determine the maximum trapped air value to correspond to the maximum temperature value of the turbocharger turbine **T Fresh_Air_Trapped_Max_To_Match_Turbine_Temperature_Maximum,** i.e. the amount of trapped air that allows the maximum temperature value to be reached by the turbocharger turbine **T** and also taking into account the maximum permissible temperature value of the turbocharger turbine **T Turbine_Temperature_Maximum.**

It should also be noted that, in order to perform the above operations, the overtemperature protection module **2** comprises a map linking the rotational speed of the shaft **Engine_Speed** of the internal combustion engine **MT** to the base temperature limit value of the three-way catalyst **TWC Catalyst_Temperature_Limit_Base** for the determination of the maximum trapped air value to correspond to the maximum temperature value of the three-way catalyst **TWC Fresh_Air_Trapped_Max_To_Match_Catalyst_Temperature_Maximum,** also considering the maximum permissible temperature value of the three-way catalyst **TWC Catalyst_Temperature_Maximum.** Similar considerations apply to the turbocharger turbine **T,** i.e. the overtemperature protection module **2** comprises a map which links the rotational speed of the shaft **Engine_Speed** of the internal combustion engine **MT** to the base temperature limit value of the turbocharger **T Turbine_Temperature_Limit_Base** for the determination of the maximum trapped air value to correspond to the maximum temperature value of the turbocharger turbine **T Fresh_Air_Trapped_Max_To_Match_Turbine_Temperature_Maximum,** also considering the maximum permissible temperature value of the turbocharger turbine **T Turbine_Temperature_Maximum**

Therefore, the overtemperature protection module **2** allows, by means of an open-loop control, to determine the trapped air values that ensure that the maximum permissible temperature values of the three-way catalyst **TWC** and the turbocharger **T Catalyst_Temperature_Maximum** and **Turbine_Temperature_Maximum**are reached, i.e. the trapped air values **Fresh_Air_Trapped_Max_To_Match_Catalyst_Temperature_Maximum** and **Fresh_Air_Trapped_Max_To_Match_Turbine_Temperature_Maximum** the minimum of which is used in open-loop control for determining the maximum trapped air for overtemperature protection value **Fresh_Air_Trapped_Max_For_Exhaust_Overtemperature_Protection**

In more detail, for the determination of the maximum trapped air for overtemperature protection value **Fresh_Air_Trapped_Max_For_Exhaust_Overtemperature_Protection,** the above-mentioned maximum trapped air values to correspond to the maximum temperature value of the three-way catalyst **TWC Fresh_Air_Trapped_Max_To_Match_Catalyst_Temperature_Maximum** and of the turbocharger turbine **T Fresh_Air_Trapped_Max_To_Match_Turbine_Temperature_Maximum** are controlled in a closed loop by the above control values **CTRL_{TWC}, CTRL_{T}** of the three-way catalyst **TWC** and turbocharger turbine **T.** Specifically, the control values **CTRL_{TWC}, CTRL** of three-way catalyst **TWC** and turbocharger turbine **T** are correction terms which are added to the maximum trapped air values to correspond to the maximum temperature value of the three-way catalyst **TWC Fresh_Air_Trapped_Max_To_Match_Catalyst_Temperature_Maximum** and of the turbocharger turbine **T Fresh_Air_Trapped_Max_To_Match_Turbine_Temperature_Maximum** respectively; subsequently, the overtemperature protection module **2** is designed to determine the minimum trapped air value which ensures that the maximum permissible temperature values of the three-way catalyst **TWC** and of the turbocharger turbine **T Catalyst_Temperature_Maximum** and **Turbine_Temperature_Maximum**are reached between the values obtained as a result of the above addition i.e. the minimum value between the maximum trapped air values to correspond to the maximum temperature value of the three-way catalyst **TWC Fresh_Air_Trapped_Max_To_Match_Catalyst_Temperature_Maximum** and of the turbocharger turbine **T Fresh_Air_Trapped_Max_To_Match_Turbine_Temperature_Maximum;** this minimum value is then limited to obtain the maximum trapped air for overtemperature protection value **Fresh_Air_Trapped_Max_For_Exhaust_Overtemperature_Protection.**

Therefore, the overtemperature protection module **2** is designed to determine the maximum trapped air for overtemperature protection value **Fresh_Air_Trapped_Max_For_Exhaust_Overtemperature_Protection** based on the maximum trapped air value to correspond to the maximum temperature value of the three-way catalyst **Fresh_Air_Trapped_Max_To_Match_Catalyst_Temperature_Maximum, Fresh_Air_Trapped_Max_To_Match_Turbine_Temperature_Maximum** and control values **CTRL_{TWC}, CTRL_{T}** of the three-way catalytic converter **TWC** and turbocharger turbine **T** limiting the maximum trapped air for overtemperature protection value **Fresh_Air_Trapped_Max_For_Exhaust_Overtemperature_Protection** with a calibratable gradient that can be differentiated between increasing and decreasing limitation scenarios.

Next, according to an aspect of the present invention, the overtemperature protection module **2** is designed to limit the target trapped air value **Fresh_Air_Trapped_Target** to at least the maximum trapped air for overtemperature protection value **Fresh_Air_Trapped_Max_For_Exhaust_Overtemperature_Protection** by superiorly saturating the target trapped air value **Fresh Air Trapped Target.**

Therefore, in light of the above, the trapped air target value **Fresh_Air_Trapped_Target** is used to calculate the air actuations in the internal combustion engine **MT,** thereby determining, by implementing the above methodology to reduce the engine torque transmitted to the drive wheels **W** of the vehicle **V** with hybrid propulsion in the event of activation of the overtemperature protection, i.e., in the event that it is determined that the target trapped air value **Fresh_Air_Trapped_Target** is to be limited, an overtemperature protection is established and, therefore, the implementation of a consequent reduction in engine torque.

According to an aspect of the present invention, the maximum permissible limitation for the trapped air target value **Fresh_Air_Trapped_Target** is calibratable to always be less than a calibratable threshold value, e.g. equal to 20% of the maximum trapped air target value **Fresh_Air_Trapped_Target** at the rotational speed of the shaft **Engine_Speed** of the current internal combustion engine **MT** to avoid unintended excessive torque limitations.

As anticipated, it should be noted that the overtemperature protection module **2** is designed to determine the maximum values of trapped air for overtemperature protection **Fresh_Air_Trapped_Max_For_Exhaust_Overtemperature_Protection** according to further methodologies, different from the one described in the previous paragraphs, e.g. using closed-loop control of the engine torque as a function of the estimated temperature of the exhaust components, or by reducing the maximum engine torque proportionally to the excess of the exhaust component temperature with respect to the respective permissible limit temperatures.

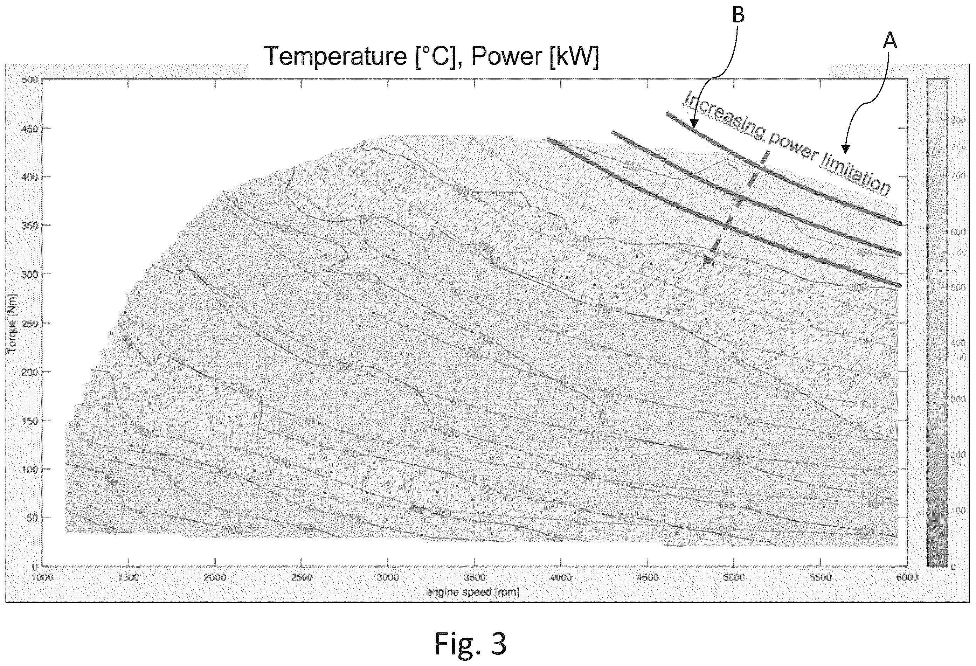

Figure 3 shows isotemperature curves as a function of the rotational speed of the shaft **Engine_Speed** of the internal combustion engine **MT** and the torque transmitted to the drive wheels **W** of the vehicle **V** with hybrid propulsion, when the vehicular control system **1** is active. In particular, it should be noted that, in the region **A,** in which overtemperature protection is expected to be required, the temperature trend is similar to that of the hyperbolas each representing a corresponding isopower curve relative to the internal combustion engine MT and cumulatively indicated by reference B. In the light of this graph, the Applicant therefore observes that a limitation of a maximum engine torque value at different speeds **Maximum_Engine_Torque_At_Different_Engine_Speed** and therefore of the maximum trapped air for overtemperature protection value **Fresh_Air_Trapped_Max_For_Exhaust_Overtemperature_Protection,** varies with hyperbolic law as a function of the shaft rotation speed **Engine_Speed** of the internal combustion engine **MT** to ensure the same protection margin calculated for the shaft rotation speed **Engine_Speed** of the internal combustion engine **MT** even for different shaft rotation speed values **Engine_Speed** of the internal combustion engine **MT.** In fact, as is well known, the power delivered by the internal combustion engine **MT** is determined as the product between the engine torque to be delivered and the rotational speed of the shaft **Engine_Speed** of the internal combustion engine **MT;** Consequently, it is noted that a hyperbolic relationship exists between the engine torque and the rotational speed of the shaft **Engine**_**Speed** of the internal combustion engine **MT,** since, from the aforementioned relationship, the engine torque is determined as the ratio between the power output of the internal combustion engine **MT** and the rotational speed of the shaft **Engine_Speed** of the internal combustion engine **MT.**

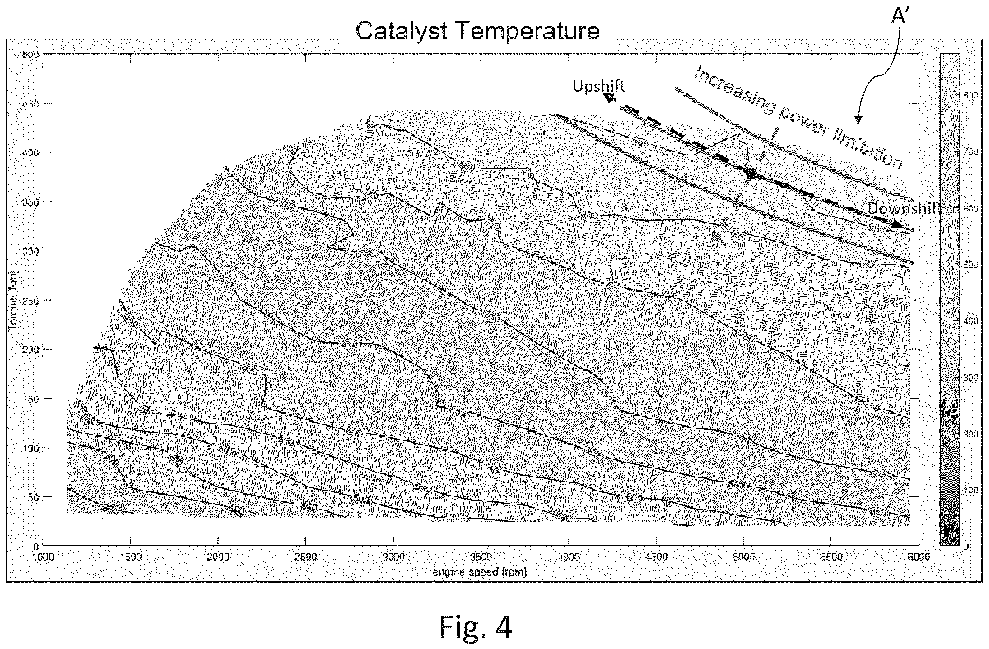

Figure 4 shows the trend in engine torque transmitted to the drive wheels **W** of the vehicle with hybrid propulsion **V** and the temperature of the three-way catalyst **TWC** with respect to the rotational speed of the shaft **Engine_Speed** of the internal combustion engine **MT** of the vehicle with hybrid propulsion **V** itself when the **1** vehicular control system is active. In both cases, the Applicant observes that, with increasing power limitation, there is an appreciable reduction in the temperature of, for example, the three-way catalytic converter **TWC,** thus implementing an overtemperature protection strategy at any rotational speed of the shaft **Engine**_**Speed** of the internal combustion engine **MT.**

Therefore, in the case of vehicles with hybrid propulsion such as the vehicle V, the present vehicular control system 1 is designed to determine the maximum trapped air for overtemperature protection values **Fresh_Air_Trapped_Max_For_Exhaust_Overtemperature_Protection** at different speeds Engine_Speed of the vehicle power train GM of the vehicle V with hybrid propulsion in order to determine the maximum engine torque values at different speeds **Maximum_Engine_Torque_At_Different_Engine_Speed,** the latter collected in a corresponding vector, in particular based on an isopower type concept. The rationale underlying the operation of the present vehicular control system **1** refers to the fact that the temperatures of the exhaust components CS, for example of the three-way catalytic converter **TWC,** and of the exhaust gas, measured near the peak power operating point, where a reduction in engine torque is applied, are strongly correlated with the power transmitted by the vehicular power train **GM** of the vehicle **V** with hybrid propulsion; therefore, according to the present invention, the vehicular control system **1** is designed to ensure that the power transmitted at the operating point in question will provide substantially the same temperature at different speeds **Engine_Speed,** i.e., there will be virtually constant overtemperature protection. The calculation at different speeds **Engine_Speed** allows the power distribution optimizator **5** to determine the maximum engine torque when changing gears at any speed of the vehicular powertrain **GM** while maintaining an overtemperature protection strategy.

Based on what has been described above, the advantages which the present invention allows to obtain are clear.

In particular, the present invention makes it possible to protect exhaust components, in particular the three-way catalytic converter and the turbocharger, as well as further exhaust components such as, for example, the gasoline particulate filter, from permanent overtemperature damage, in particular by calculating the maximum permissible engine torque at different speeds.

Furthermore, the present invention reduces or avoids the need to enrich the fuel mixture to protect the exhaust components, thus fulfilling the requirements of regulations such as "*Euro6.e bis*"*.*

In addition, the present invention makes it possible to reduce fuel consumption, reduce emissions and mitigate any complaints about the drivability of the vehicle by drivers.

In addition, the present invention makes it possible to prevent complaints due to high-load gear changes.

In addition, the present invention makes it possible to reduce service costs for replacing exhaust components, improve the product quality index for the vehicle's components and propulsion control unit, and reduce fuel consumption.

## Claims

1. Vehicular control system **(1)** for the overtemperature protection of exhaust components **(TWC, T)** of a vehicle **(V)** with hybrid propulsion; the vehicle **(V)** with hybrid propulsion comprises a vehicular powertrain **(GM)** comprising a hybrid propulsion unit **(UHP)** and a transmission system **(T)** interposed between the hybrid propulsion unit **(UHP)** and drive wheels **(W)** of the vehicle **(V)** with hybrid propulsion;
the hybrid propulsion unit **(UHP)** comprises an internal combustion engine **(MT)** and a reversible electric machine **(ME)** and is electronically controllable to operate selectively in different operating modes comprising an electric mode wherein the vehicle **(V)** with hybrid propulsion is propelled by the reversible electric machine **(ME)** alone, and a hybrid mode, wherein the vehicle **(V)** with hybrid propulsion is propelled by the internal combustion engine **(MT),** possibly assisted by the reversible electric machine **(ME)** under certain operating conditions of the vehicle **(V)** with hybrid propulsion,
**characterised in that** the vehicle control system **(1)** is designed to:
- acquire maximum trapped air for overtemperature protection values **(Fresh_Air_Trapped_Max_For_Exhaust_Overtemperature_Protection)** and shaft speed values **(Engine_Speed)** of the internal combustion engine **(MT)** of the vehicle **(V)** with hybrid propulsion;
- determine maximum engine torque at different speeds values **(Maximum_Engine_Torque_At_Different_Engine_Speed)** applicable from the combustion engine **(MT)** of the vehicle **(V)** with hybrid propulsion to the wheels **(W)** of the vehicle **(V)** with hybrid propulsion itself based on the maximum trapped air for overtemperature protection values **(Fresh_Air_Trapped_Max_For_Exhaust_Overtemperature_Protection)** and shaft speed values **(Engine_Speed);** and
- adapting the dynamics of the vehicle **(V)** with hybrid propulsion according to the maximum engine torque at different speeds values **(Maximum_Engine_Torque_At_Different_Engine_Speed).**

2. The vehicular control system **(1)** according to claim **1** and comprising:
- an overtemperature protection module **(2)** designed to receive quantities relative to the exhaust components **(TWC, T)** of the vehicle **(V)** with hybrid propulsion and output the maximum trapped air for overtemperature protection values **(Fresh_Air_Trapped_Max_For_Exhaust_Overtemperature_Protection);** and
- a maximum engine torque calculator **(3)** designed to receive as input the maximum trapped air for overtemperature protection values **(Fresh_Air_Trapped_Max_For_Exhaust_Overtemperature_Protection),** a quantity of trapped air **(Fresh_Air_Trapped)** and shaft speed values **(Engine_Speed)** to determine the maximum engine torque at different speeds values **(Maximum_Engine_Torque_At_Different_Engine_Speed)** and maximum engine torque values **(Maximum_Engine_Torque)** of the vehicle **(V)** with hybrid propulsion.

3. The vehicular control system **(1)** according to claim **2** and further comprising:
- a power request calculator **(4)** designed to receive as input and process data indicative of the driving pattern of the vehicle **(V)** with hybrid propulsion to determine a total power request **(Total_Power_Request);** and
- a power split optimizator **(5)** designed to receive as input and process the total power request **(Total_Power_Request),** the maximum engine torque values **(Maximum_Engine_Torque)** and the maximum engine torque at different speeds values **(Maximum_Engine_Torque_At_Different_Engine_Speed)** to determine the respective power or torque request **(Internal_Combustion_Engine_Power_Request, Electric_Motor_Power_Request)** of the internal combustion engine **(MT)** and the reversible electric machine **(ME).**

4. The vehicular control system **(1)** according to claim **3,** wherein the power split optimizator **(5)** is further designed to output an optimum gear to be applied request **(Optimum_Gear_Request)** to minimise the energy consumption required to propel the vehicle **(V)** with hybrid propulsion.

5. The vehicular control system **(1)** according to any one of claims **2-4,** wherein the exhaust components comprise at least a three-way catalyst **(TWC)** and a turbocharger turbine **(T),**
and wherein the quantities relative to the exhaust components **(TWC, T)** of the vehicle **(V)** with hybrid propulsion comprise at least:
- a three-way catalyst temperature value **(Catalyst_Temperature);**
- a maximum permissible three-way catalyst temperature value **(Catalyst_Temperature_Maximum);**
- a turbocharger turbine temperature value **(Turbine_Temperature);** and
- a maximum permissible turbocharger turbine temperature value **(Turbine_Temperature_Maximum).**

6. Vehicle **(V)** with hybrid propulsion comprising a vehicular powertrain **(GM)** comprising a hybrid propulsion unit **(UHP)** and a transmission system **(T)** interposed between the hybrid propulsion unit **(UHP)** and the drive wheels **(W)** of the vehicle **(V)** with hybrid propulsion;
the hybrid propulsion unit **(UHP)** comprises an internal combustion engine **(MT)** and a reversible electric machine **(ME)** and is electronically controllable to operate selectively in different operating modes including an electric mode, wherein the vehicle **(V)** with hybrid propulsion is propelled by the reversible electric machine **(ME)** alone, and a hybrid mode, in which the vehicle **(V)** with hybrid propulsion is propelled by the internal combustion engine **(MT),** possibly assisted by the reversible electric machine **(ME)** under certain operating conditions of the vehicle **(V)** with hybrid propulsion,
the vehicle **(V)** with hybrid propulsion is designed to be in communication with a vehicular control system **(1)** for the overtemperature protection of exhaust components **(TWC, T)** of a vehicle **(V)** with hybrid propulsion according to any one of the preceding claims.

7. A computer program product loadable in and executable by a vehicular control system **(1)** for the overtemperature protection of exhaust components **(TWC, T)** of a vehicle **(V)** with hybrid propulsion according to any one of claims **1-5,** and designed, when executed, to cause the vehicular control system **(1)** to operate in the manner claimed in any one of claims **1-5.**
